# EUROPÄISCHE PATENTSCHRIFT

(11) **EP 3 993 452 B1**
(45) Veröffentlichungstag und Bekanntmachung des Hinweises auf die Patenterteilung: **19.06.2024**
(21) Anmeldenummer: 21200965.8
(22) Anmeldetag: 05.10.2021
(51) Int. Cl.: H04W 4/02, H04L 12/28, H04W 4/80

(54) **KOPPLUNG EINES HAUSHALTSGERÄTS MIT EINEM MOBILGERÄT**
PAIRING A HOME APPLIANCE WITH A MOBILE DEVICE
COUPLAGE D'UN APPAREIL ÉLECTROMÉNAGER AVEC UN APPAREIL MOBILE

(30) Priorität: 02.11.2020 DE 102020213754
(43) Veröffentlichungstag der Anmeldung: 04.05.2022
(73) Patentinhaber: BSH Hausgeräte GmbH, 81739 München (DE)
(72) Erfinder: Grimminger, Jochen, 89407 Dillingen (DE); Schaefer, Frank, 82178 Puchheim (DE)

(56) Entgegenhaltungen:
- DE-A1-102017 109 935
- JP-A- 2015 130 574

## Beschreibung

Die Erfindung betrifft ein Haushaltsgerät. Insbesondere betrifft die Erfindung eine drahtlose Kopplung eines Haushaltsgeräts mit einem Mobilgerät.

DE 10 2017 109935 A1 offenbart ein Haushaltsgerät, welches dazu eingerichtet ist, das selbsttätige Anpassen von Anzeigeeinstellungen einer Anzeige, wie etwa die Schriftgröße, und/oder das selbsttätige Anpassen der Lautstärke einer akustischen Wiedergabe durch das Haushaltsgerät in Abhängigkeit von der Entfernung eines Benutzers von dem Haushaltsgerät durchzuführen.

Ein Haushaltsgerät umfasst eine grafische Anzeige, auf der ein Zustand des Geräts dargestellt werden kann. Beispielsweise kann die Anzeige an einem Kühlgerät eine Innentemperatur, einen Füllgrad, eine aktuell aufgenommene Energie oder einen Betriebsmodus darstellen. Eine Bedienung des Haushaltsgeräts erfolgt üblicherweise mittels einer lokal angebrachten Eingabeeinrichtung, beispielsweise eines Schalters oder Drehknopfs. Die Eingabevorrichtung kann mit der Ausgabevorrichtung integriert ausgeführt sein, beispielsweise in Form eines berührungsempfindlichen Bildschirms (Touchscreen).

Die grafische Anzeige kann verwendet werden, um einem Benutzer eine zusätzliche Funktion bereitzustellen, die über die Steuerung des Haushaltsgeräts hinausgehen kann. Beispielsweise kann auf der Anzeige ein Kochrezept dargestellt werden. Es hat sich aber gezeigt, dass die Bereitstellung der zusätzlichen Funktion, im gegebenen Beispiel die Vorhaltung einer Sammlung von Kochrezepten, aufwändig zu implementieren sein kann. Die Funktion muss üblicherweise auf funktionaler Ebene und auf Daten-Ebene regelmäßig aktualisiert werden. Dabei kann eine Lebensdauer des Haushaltsgeräts eine Lebensdauer einer üblichen Plattform, mit der die Funktion klassischerweise bereitgestellt werden kann, um ein Vielfaches übersteigen. Das Haushaltsgerät kann daher schon weit vor dem Ende seiner Nutzungsdauer nicht mehr in der Lage sein, die zusätzliche Funktion in ihrer aktuellen Form zuverlässig auszuführen.

Eine Ausstattung des Haushaltsgeräts mit einer leistungsfähigen Verarbeitungseinrichtung kann kostenintensiv sein; außerdem ist üblicherweise nicht bekannt, welche konkreten Anforderungen zukünftig an die Bereitstellung der Funktion gestellt werden, sodass die Verarbeitungseinrichtung in einem benötigten Aspekt trotzdem unterdimensioniert sein kann.

Eine der vorliegenden Erfindung zugrunde liegende Aufgabe liegt in der Bereitstellung einer verbesserten Technik zur Steuerung einer Ausgabe eines Haushaltsgeräts, das mit einem Mobilgerät gekoppelt ist. Die Erfindung löst diese Aufgabe mittels der Gegenstände der unabhängigen Ansprüche. Unteransprüche geben bevorzugte Ausführungsformen wieder.

Ein erster Aspekt der vorliegenden Erfindung umfasst ein Haushaltsgerät gemäß Anspruch 1.

Ein Benutzer kann das Mobilgerät bei sich tragen und sich frei im Bereich des Haushaltsgeräts bewegen. Eine Ausgabe des Mobilgeräts am Haushaltsgerät kann derart bereitgestellt werden, dass eine Wahrnehmung der Ausgabe an die Distanz des Benutzers zum Haushaltsgerät angepasst ist. Der Benutzer kann die Ausgabe verbessert erfassen und erforderlichenfalls verbessert darauf reagieren. Umfasst die Ausgabe beispielsweise eine Information, die eine Funktion des Haushaltsgeräts betrifft, so kann der Benutzer die Funktion verbessert steuern.

Ein besonderer Vorteil des hier vorgeschlagenen Ansatzes besteht darin, dass ein Mobilgerät auf einem Haushaltsgerät nutzbar gemacht werden kann. Beispielsweise ist es heute nicht möglich, das Betriebssystem Android auf Haushaltsgeräten zu betreiben, weil Google eine Zertifizierung von Android für einen solchen Formfaktor nicht vorsieht. Durch die vorgeschlagene Kopplung von Mobilgerät und Haushaltsgerät kann hingegen ermöglicht werden, das Android-Betriebssystem eines handelsüblichen Mobilgeräts auf dem Haushaltsgerät zu nutzen.

Die Einrichtung zur Bestimmung der Entfernung kann einen dedizierten Sensor wie einen Ultraschallsensor, einen Radarsensor oder einen LiDAR Sensor umfassen. In einer bevorzugten Ausführungsform ist die Einrichtung zur Bestimmung der Entfernung integriert mit der Kommunikationseinrichtung ausgeführt. Beispielsweise kann eine Entfernung zwischen dem Mobilgerät und dem Haushaltsgerät auf der Basis von Informationen bestimmt werden, die eine übliche Kommunikationseinrichtung bereits bestimmt. Beispielsweise bei der Kommunikation mittels WLAN oder Bluetooth kann eine solche Information anfallen oder gezielt bestimmt werden. Eine weitere denkbare Einrichtung zur Bestimmung der Entfernung basiert auf UWB (Ultra WideBand, z.B. IEEE 802.15.3a).

Die Kommunikationseinrichtung kann dazu eingerichtet sein, die Entfernung auf der Basis einer Stärke oder einer Störungsfreiheit eines vom Mobilgerät empfangenen drahtlosen Signals zu bestimmen. Die Stärke des empfangenen Signals wird auch RSS ("received signal strength") genannt und kann in Kenntnis der Stärke des ausgesandten Signals eine Bestimmung der Entfernung erlauben. Eine Störungsfreiheit kann als Signal-Rausch-Verhältnis (SNR: "signal to noise ratio") angegeben sein. Auch eine Fehlerrate bei der Übertragung von Informationen zwischen dem Haushaltsgerät und dem Mobilgerät kann zur Bestimmung der Störungsfreiheit betrachtet werden.

In einer Ausführungsform wird eine Entfernung zwischen den Geräten mittels einer Technologie bestimmt, die als Beacon bekannt ist. Dabei sendet eines der Geräte drahtlose Signale aus, die eine Nachricht enthalten. Die Nachricht kann Informationen bezüglich der Stärke des ausgesandten Signals, einer Position des Senders, einer Identifikation des Senders oder weitere Angaben umfassen. Dadurch kann die Entfernung in einem Bereich bestimmt werden, der bis ca. 20 Meter umfassen kann. Je kürzer die Entfernung ist, desto genauer kann die Bestimmung erfolgen. Ein Empfänger kann seine Position bezüglich einer Entfernung zu einem Beacon verbessert bestimmen. Eine Genauigkeit der bestimmten Position kann unterhalb von ca. einem Meter betragen.

Die Ausgabevorrichtung kann eine Anzeigeeinrichtung umfassen, wobei eine Größe, ein Detailreichtum oder eine Farbwahl der Ausgabe in Abhängigkeit der Entfernung gesteuert wird. Dabei kann die bereitgestellte Ausgabe an Fähigkeiten der Anzeigeeinrichtung angepasst werden, beispielsweise bezüglich einer Darstellungsgröße, einer Orientierung oder Anordnung von einzelnen Informationen. Ist eine Anzeigeeinrichtung zu klein, um vorbestimmte Informationen in einer gewünschten Größe vollständig anzuzeigen, so können die Informationen nach Art einer Laufschrift oder in einer vorbestimmten Abfolge nacheinander bereitgestellt werden.

Die Ausgabevorrichtung kann eine steuerbare Schallquelle umfassen, wobei eine Lautstärke der Ausgabe in Abhängigkeit der Entfernung gesteuert wird. So kann beispielsweise ein Audiodatenstrom so ausgegeben werden, dass er für den Benutzer immer gleich laut wahrgenommen wird, auch wenn er seine Position in einem Raum mit dem Haushaltsgerät verändert.

Ein zweiter Aspekt der vorliegenden Erfindung umfasst ein ein System, umfassend ein Haushaltsgerät gemäß dem ersten Aspekt und ein Mobilgerät mit einer , Kommunikationseinrichtung zur drahtlosen Kopplung mit einem Haushaltsgerät, wobei das Mobilgerät dazu eingerichtet ist, eine bereitzustellende Ausgabe an das Haushaltsgerät zu übertragen.

Das Mobilgerät kann insbesondere dazu eingerichtet sein, eine Kopplung mit einem Haushaltsgerät nach einer vorbestimmten Richtlinie durchzuführen. Die Richtlinie kann beispielsweise steuern, welche Funktion oder Applikation, die das Mobilgerät ausführt, einem vorbestimmten Haushaltsgerät oder einer durch das Haushaltsgerät ausgeführten Funktion zugeordnet sein soll. Eine Kommunikation zwischen vorbestimmten Kommunikationspartnern seitens des Haushaltsgeräts und des Mobilgeräts kann so leichter etabliert werden. Eine Funktion, die einem Haushaltsgerät zugeordnet ist, kann beispielsweise automatisch auf dem Mobilgerät gestartet werden, wenn das Haushaltsgerät in eine vorbestimmte Entfernung gerät. Beispielsweise kann eine Rezepte-App auf dem Mobilgerät gestartet werden, wenn sich der Nutzer mit dem Mobilgerät seinem Herd, Ofen oder einem sonstigen Kochgerät nähert.

Die Richtlinie kann ferner steuern, mit welchem Haushaltsgerät sich das Mobilgerät koppelt. Insbesondere kann die Richtlinie steuern, dass sich das Mobilgerät nur mit einem vorbestimmten von mehreren Haushaltsgeräten koppelt, z.B einem Kochfeld mit einem integrierten Bildschirm, wie einem TFT- oder LCD-Bildschirm. Alternativ kann eine Kopplung nur jeweils mit einem nächst gelegenen Haushaltsgerät erfolgen, also einem Haushaltsgerät, das die kleinste Entfernung zum Mobilgerät aufweist. Diese Bestimmung kann auf einer vorbestimmten Gruppe von Haushaltsgeräten erfolgen, die beispielsweise einem vorbestimmten Haushalt zugeordnet sind. Gemäß der Richtlinie kann auch vorgesehen sein, dass eine Verbindung immer mit dem Haushaltsgerät erfolgt, dass am nächsten liegt und gewisse Fähigkeiten aufweist. Beispielsweise kann die Richtlinie besagen, dass immer das nächstgelegene Haushaltsgerät mit einem Lautsprecher mit dem Mobilgerät gekoppelt werden soll, so dass ein Nutzer, der auf seinem Mobilgerät einen Musik-Streaming-Dienst betreibt und dabei durch seine Wohnung läuft, die Musik jeweils auch auf dem nächstgelegenen Haushaltsgerät mit Lautsprecher hören kann.

In einer Ausführungsform kann die Richtlinie Informationen darüber umfassen, unter welchen Umständen welche auf dem Mobilgerät installierte App zu starten ist und/oder unter welchen Umständen welche auf dem Mobilgerät installiert App auf der Ausgabevorrichtung das Haushaltsgeräts auszugeben ist. Beispielsweise kann in der Richtlinie angegeben sein, dass die Rezepte-App zu starten ist, wenn sich das Mobilgerät einem Kochfeld mit TFT-Bildschirm nähert. Die Rezepte-App läuft dann formell zwar auf dem Mobilgerät, wird aber ebenfalls auf diesem TFT-Bildschirm des Kochfelds gespiegelt. Geht während des Kochens ein Anruf ein, so können die Richtlinien vorsehen, dass dieser Anruf eine höhere Priorität als die Rezepte-App besitzt und somit der Anruf vorrangig auf dem TFT-Bildschirm des Kochfelds angezeigt wird. Auf diese Weise können die Richtlinien für den Nutzer optimierte Interaktionsmuster festlegen.

Das Mobilgerät kann dazu eingerichtet sein, die Richtlinie von einer zentralen Stelle zu beziehen. Dabei kann Gebrauch von einer drahtgebundenen oder drahtlosen Kommunikationseinrichtung gemacht werden. Die zentrale Stelle kann Aspekte von Haushaltsgeräten steuern oder verwalten, die einem Benutzer oder einem Haushalt zugeordnet sind.

Das Mobilgerät kann dazu eingerichtet, drahtlose Signale vom Haushaltsgerät zu empfangen, einen Hinweis auf seine Entfernung zum Haushaltsgerät auf der Basis von empfangenen Signalen zu bestimmen; und die Entfernung an das Haushaltsgerät zu übertragen. Durch das Bestimmen der Entfernung seitens des Mobilgeräts kann eine dort verfügbare Technologie leicht mitbenutzt werden. Das Haushaltsgerät beziehungsweise die Steuervorrichtung kann insbesondere als Beacon ausgeführt werden, zu dem das Mobilgerät seine Entfernung leicht bestimmen kann.

Wie weiter oben bereits ausgeführt wurde, kann die Ausgabevorrichtung des Haushaltsgeräts eine Anzeigeeinrichtung und/oder eine steuerbare Schallquelle umfassen, wobei die bereitgestellte Ausgabe an Fähigkeiten der Anzeigeeinrichtung bzw. an die Entfernung angepasst und/oder eine Lautstärke der Ausgabe in Abhängigkeit der Entfernung gesteuert werden kann. In einer besonders bevorzugten Ausführungsform ist vorgesehen, dass auch eine parallele Ausgabe auf dem Mobilgerät entsprechend der Ausgabe am Hausgerät angepasst wird. Dies kann insbesondere bedeuten, dass die Änderung einer Größe, eines Detailreichtums oder einer Farbwahl der Ausgabe am Haushaltsgerät in dieser Form auch auf dem Mobilgerät zu sehen ist. Das Mobilgerät kann also dazu eingerichtet sein, die Ausgabe am Haushaltsgerät ebenfalls auf dem Mobilgerät auszugeben, wobei eine Ausgabe auf dem Mobilgerät der Ausgabe am Haushaltsgerät, insbesondere hinsichtlich Größe, Detailreichtum, Farbwahl und/oder Lautstärke, entspricht.

Ist das Mobilgerät dazu eingerichtet, eine Richtlinie anzuwenden, so kann das System ferner eine zentrale Stelle zur Bereitstellung einer Richtlinie für das Mobilgerät umfassen.

Es ist bevorzugt, dass das Mobilgerät dazu eingerichtet ist, seine Position auf der Basis der empfangenen drahtlosen Signale zu bestimmen und an das Haushaltsgerät zu übermitteln; und das Haushaltsgerät dazu eingerichtet ist, die Entfernung auf der Basis seiner Position und der Position des Mobilgeräts zu bestimmen. Das Mobilgerät kann seine Position auf der Basis eines oder mehrerer Sensoren bestimmen, beispielsweise mittels eines satellitengestützten Radionavigationssystems oder einer Inertialplattform. Die Position kann alternativ oder zusätzlich durch die Bestimmung eines Abstands zu einem oder mehreren Beacons erfolgen, von denen eines das Haushaltsgerät umfassen kann.

Nach noch einem weiteren Aspekt umfasst die vorliegende Erfindung ein Verfahren gemäß Anspruch 14.

Die Entfernung kann auf der Basis eines zwischen dem Haushaltsgerät und dem Mobilgerät übermittelten drahtlosen Kommunikationssignals bestimmt werden. Das Kommunikationssignal kann insbesondere WLAN oder Bluetooth (BT oder BLE) umfassen. Eine mittels des Kommunikationssignals übertragene Information kann die Bestimmung des Abstands unterstützen.

Das Verfahren kann mittels einer hierin beschriebenen Steuervorrichtung, eines hierin beschriebenen Haushaltsgeräts, eines hierin beschriebenen Mobilgeräts oder eines hierin beschriebenen Mobilgeräts ausgeführt werden. Ein ausführendes Gerät kann einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Haushaltsgeräts, des Mobilgeräts oder des Systems können untereinander oder auf das Verfahren übertragen werden oder umgekehrt.

Die Erfindung wird nun unter Bezug auf die beiliegenden Figuren genauer beschrieben, in denen:
- Figur 1: ein System mit einem Haushaltsgerät und einem Mobilgerät; und
- Figur 2: ein Verfahren zum Steuern eines Haushaltsgeräts
darstellt.

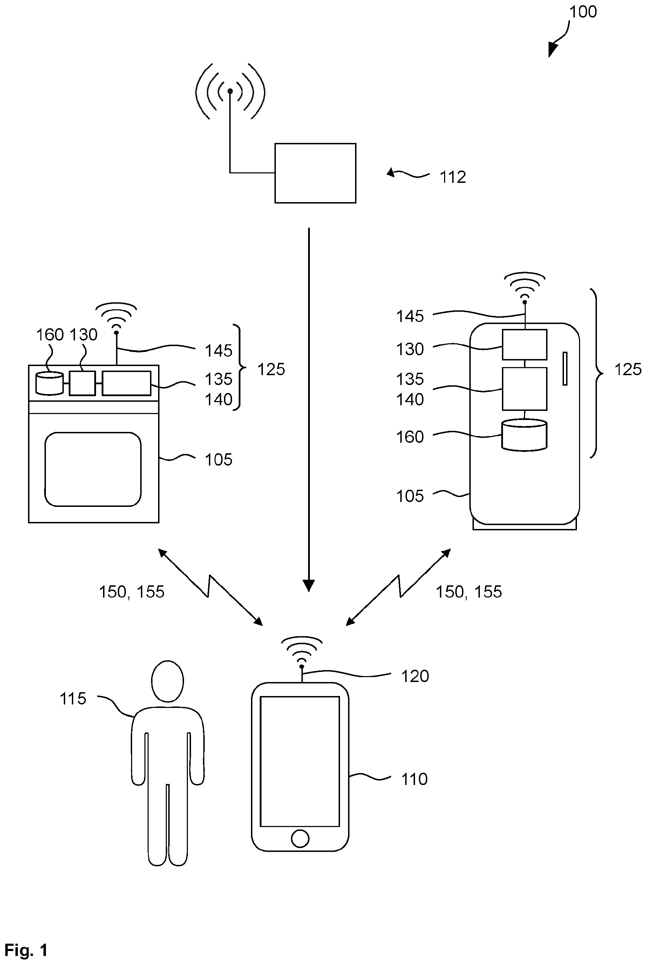

Figur 1 zeigt ein System 100 mit wenigstens einem Haushaltsgerät 105, einem Mobilgerät 110 und einer optionalen zentralen Stelle 112. Ein erstes beispielhaftes Haushaltsgerät 105 ist beispielhaft als Ofen dargestellt, ein zweites als Kühlgerät; es können jedoch auch andere Geräte verwendet werden, beispielsweise ein Herd, eine Dunstabzugshaube oder ein Rührgerät. Das Haushaltsgerät 105 kann insbesondere ein Küchengerät umfassen, das zum Betrieb in einer Küche eines Haushalts eingerichtet ist. Die Haushaltsgeräte 105 befinden sich bevorzugt nahe beieinander, beispielsweise im gemeinsamen Haushalt oder einem gemeinsamen Zimmer wie einer Küche.

Das Mobilgerät 110 umfasst bevorzugt ein Smartphone, einen Tabletcomputer oder eine Fitnessuhr und ist üblicherweise einem vorbestimmten Benutzer 115 zugeordnet, der das Mobilgerät 110 bei sich tragen kann. Auf dem Mobilgerät 110 kann eine vorbestimmte Funktion bereitgestellt werden, die insbesondere durch ein zugeordnetes Programm oder eine Applikation erbracht werden kann. Beispielhafte Funktionen umfassen die Verwaltung einer Sammlung von Kochrezepten, eine akustische oder textuelle Kommunikation mit einem anderen, entfernten Benutzer oder eine Ausgabe von Musik. Dazu kann die Funktion mittels einer lokalen Ausgabevorrichtung am Mobilgerät 110 eine Ausgabe an den Benutzer 115 bereitstellen, insbesondere in optischer, akustischer oder haptischer Form. Ferner kann die Funktion eine Eingabe des Benutzers 115 an einer lokalen Eingabevorrichtung des Mobilgeräts 110 auswerten, die dieser beispielsweise manuell bereitstellt. Dazu können entsprechende Ein- und/oder Ausgabevorrichtungen am Mobilgerät 110 vorgesehen sein. Das Mobilgerät 110 kann auch zur Auswertung weiterer Eingaben oder Umgebungsparameter eingerichtet sein, die mittelbar durch den Benutzer 115 gesteuert werden können, etwa eine Position, eine Beschleunigung oder eine Umgebungshelligkeit.

Das Mobilgerät 110 ist üblicherweise dazu eingerichtet, mit einem drahtlosen Netzwerk verbunden zu werden, insbesondere einem Weitverkehrsnetz wie dem Internet. Über diese Verbindung kann das Mobilgerät 110 auch mit der zentralen Stelle 112 kommunizieren. Dazu kann das Mobilgerät 110 etwa WLAN oder Mobilfunk verwenden. Ferner umfasst das Mobilgerät 110 bevorzugt eine drahtlose Kommunikationseinrichtung 120, die dazu eingerichtet ist, eine drahtlose Datenverbindung mit einem lokalen Gerät aufzubauen, beispielsweise mit dem Haushaltsgerät 105.

Das Haushaltsgerät 105 umfasst eine Steuervorrichtung 125, die bevorzugt zur Steuerung einer Funktion des Haushaltsgeräts 105 eingerichtet ist. In einer Ausführungsform ist die Steuervorrichtung 125 dazu eingerichtet, mehrere Haushaltsgeräte 105 zu steuern. Eine Steuervorrichtung 125 kann auch eigenständig und nicht als Teil eines Haushaltsgeräts 105 ausgeführt sein. Eine Kommunikation zwischen der Steuervorrichtung 125 und einem zugeordneten Haushaltsgerät 105 erfolgt in diesem Fall bevorzugt drahtlos, beispielsweise mittels einer Technik, die als Home Connect bekannt ist. In einem Haushalt können auch mehrere Steuervorrichtungen 125 vorgesehen sein, die jeweils zur Steuerung wenigstens eines Haushaltsgeräts 105 eingerichtet sind. Dabei können die Steuervorrichtungen 125 ebenfalls miteinander datentechnisch verbunden sein.

Die Steuervorrichtung 125 umfasst eine Verarbeitungseinrichtung 130, eine Eingabevorrichtung 135, eine Ausgabevorrichtung 140 und eine drahtlose Kommunikationseinrichtung 145. Die Eingabevorrichtung 135 und die Ausgabevorrichtung 140 sind vorliegend beispielhaft als berührungsempfindlicher Bildschirm miteinander integriert ausgeführt. Eine Eingabe des Benutzers 115 kann durch Berühren eines Bereichs der Eingabevorrichtung 135 bereitgestellt werden, wobei in dem Bereich auf der Ausgabevorrichtung 140 ein optischer Hinweis auf die Eingabe dargestellt werden kann. So können kontextsensitiv unterschiedliche Eingaben ermöglicht werden.

Es wird vorgeschlagen, eine drahtlose Kopplung des Mobilgeräts 110 mit dem Haushaltsgerät 105 durchzuführen. Dann kann eine Eingabe des Benutzers 115 auf der Eingabevorrichtung 135 des Haushaltsgeräts 105 an das Mobilgerät 110 übermittelt und dort zur Steuerung der Funktion verwendet werden. In entsprechender Weise kann eine Ausgabe einer auf dem Mobilgerät 110 ablaufenden Funktion an das Haushaltsgerät 105 übermittelt und dort mittels der Ausgabevorrichtung 140 an den Benutzer 115 bereitgestellt werden.

In einer Ausführungsform können Eingaben und Ausgaben über eine einzige Datenverbindung übermittelt werden. In einer anderen Ausführungsform können eine erste Datenverbindung 150 zur Übermittlung der Eingabe und eine zweite Datenverbindung 155 zur Übermittlung der Ausgabe eingerichtet werden. Dabei können die Datenverbindungen 150, 155 voneinander unabhängig sein und unterschiedliche Protokolle oder Technologien verwenden, oder als nur eine bidirektionale Verbindung ausgeführt sein.

Über die erste Datenverbindung 150 kann sich die Steuervorrichtung 125 als Benutzerschnittstelle (user interface, Ul) darstellen, die dazu eingerichtet ist, Eingaben des Benutzers 115 zu erfassen und bereitzustellen. Als zugrunde liegendes Protokoll für die Datenverbindung 150 können beispielsweise WLAN oder Bluetooth verwendet werden.

Über die zweite Datenverbindung 155 kann sich die Steuervorrichtung 125 gegenüber dem Mobilgerät 110 als Ul Streaming Server darstellen, also als Gerät, das einen Strom von Ausgabedaten akzeptiert, die an einen Benutzer 115 gerichtet sein können. Als zugrunde liegendes Protokoll können beispielsweise Miracast oder AirPlay verwendet werden, die ihrerseits auf WLAN oder Bluetooth aufbauen können.

Eine Entfernung zwischen dem Haushaltsgerät 105 und dem Mobilgerät 110 kann auf der Basis einer der Datenverbindungen 150, 155 bestimmt werden. Insbesondere kann die Kommunikationseinrichtung 145 dazu eingerichtet sein, die Entfernung und optional auch eine Richtung des Mobilgeräts 110 auf der Basis von Übertragungsparametern abzuschätzen. Insbesondere können eine Signalstärke, ein Signal-Rausch-Verhältnis oder eine Fehlerrate zur Entfernungsbestimmung verwendet werden. Sind mehrere Antennen verfügbar, können zueinander korrespondierende Parameter zur Entfernungsbestimmung in einen Kontext gesetzt werden. Die Entfernung kann seitens der Steuervorrichtung 120 oder seitens des Mobilgeräts 110 bestimmt werden. Eine seitens des Mobilgeräts 110 bestimmte Entfernung kann an das Haushaltsgerät 105 übermittelt werden.

Das Mobilgerät 110 kann auch seine geographische Position bestimmen, beispielsweise auf der Basis von Bestimmungen eines Empfängers eines satellitengestützten Navigationssystems, eines Inertialsystems und/oder einer Entfernung zu einem der Haushaltsgeräte 105. Dazu kann ein Haushaltsgerät 105 ein Beacon implementieren, das seine eigene Position mittels drahtloser Signale bereitstellt. Diese Technik kann insbesondere auf der Basis von Bluetooth Low Energy (BTLE) leicht genutzt werden. Die Position des Mobilgeräts 110 kann dann auf der Basis der übermittelten Position und einer Entfernung zum Haushaltsgerät 105 bestimmt werden, die auf der Basis von Übertragungsparametern des drahtlosen Signals bestimmt werden kann. Die bestimmte Position des Mobilgeräts 110 kann an das Haushaltsgerät 115 übermittelt werden, das dann auf der Basis seiner eigenen Position die Entfernung zum Mobilgerät 110 bestimmen kann.

Bevorzugt ist die Verarbeitungseinrichtung 130 dazu eingerichtet, Eigenschaften der Ausgabevorrichtung 140 und Anforderungen einer empfangenen Ausgabe des Mobilgeräts 110 aneinander anzupassen. Beispielsweise können eine Orientierung (Hochformat oder Querformat), eine Farbfähigkeit, eine grafische Auflösung oder eine Größe eines verfügbaren Anzeigebereichs der Ausgabevorrichtung 140 als Eigenschaft an das Mobilgerät 110 bereitgestellt werden. Sollte das Mobilgerät 110 eine Ausgabe bereitstellen, die diesen Vorgaben nicht folgt, so kann die Verarbeitungseinrichtung 130 eine entsprechende Umformung der Ausgabe vornehmen. Dabei können beispielsweise Darstellungsgrößen oder Auflösungen ineinander umgerechnet werden oder eine Farbpalette kann reduziert oder anders belegt werden.

In manchen Ausführungsformen kann ein Anzeigebereich auf der Ausgabevorrichtung 140 für eine Funktion des Mobilgeräts 110 dynamisch zur Verfügung gestellt sein. In diesem Fall kann die Umrechnung transparent erfolgen oder geänderte Eigenschaften der Ausgabevorrichtung 140 können an das Mobilgerät 110 gemeldet werden.

In einer bevorzugten Ausführungsform kann das Mobilgerät in Erfahrung bringen, welche Fähigkeiten die Ausgabevorrichtung des Haushaltsgeräts besitzt. Basierend auf dieser Information und/oder der bestimmten Entfernung zwischen dem Mobilgerät und dem Haushaltsgerät kann das Mobilgerät die Anzeige entsprechend skalieren und bereits in skalierter Form an das Haushaltsgerät übertragen. Auf diese Weise kann das Haushaltsgerät von möglicherweise aufwendigen Rechenoperationen entlastet werden.

In einer Ausführungsform ist eine Speichereinrichtung 160 vorgesehen, die mit der Verarbeitungseinrichtung 130 der Steuervorrichtung 125 verbunden ist. Die Speichereinrichtung 160 ist bevorzugt dazu eingerichtet, als Zwischenspeicher (Cache) zu arbeiten und eine Information vorübergehend aufzunehmen, die aufgrund einer Störung in der Datenverbindung 150 nicht an das Mobilgerät 110 übermittelt werden kann. Insbesondere kann bei Bedarf eine an der Eingabevorrichtung 135 erfasste Eingabe zwischengespeichert werden, bis die Datenverbindung 150 wieder hergestellt ist. Eine korrespondierende Speichereinrichtung kann seitens des Mobilgeräts 110 vorgesehen sein, um eine Ausgabe, die aufgrund einer unterbrochenen Datenverbindung 155 vorübergehend nicht an das Haushaltsgerät 105 übermittelt werden kann, zwischenzuspeichern. Ein entsprechender Zwischenspeicher kann seitens des Mobilgeräts 110 vorgesehen sein, um eine möglicherweise nicht zustellbare Ausgabe zu speichern, bis die Datenverbindung 155 wieder hergestellt ist.

Es ist bevorzugt, dass das Haushaltsgerät 105 eine erste Software-Komponente und das Mobilgerät 110 eine zweite Software-Komponente umfasst, die Eingaben und/oder Ausgaben untereinander austauschen. Dabei können die Komponenten jeweils auf eine zugrunde liegende Funktionalität des Haushaltsgeräts 105 beziehungsweise des Mobilgeräts 110 aufbauen, die eine Übermittlung über die Datenverbindungen 150, 155 bereitstellen. Sollte eine der Datenverbindungen 150, 155 vorübergehend getrennt werden, beispielsweise weil sich die Geräte 105, 110 außerhalb einer maximal überbrückbaren Reichweite befinden, weil Antennen ungünstig zueinander ausgerichtet sind oder weil sich ein Objekt, etwa eine Person 115, in einer Fresnelzone der Antennen befindet, so können zu übermittelnde Informationen seitens des Haushaltsgeräts 105 in der Speichereinrichtung 160 und/oder seitens des Mobilgeräts 110 in einer korrespondierenden Speichereinrichtung abgespeichert werden. Sollte die Datenverbindung 150, 155 innerhalb einer vorbestimmten Zeit, beispielsweise ca. 10, ca. 5 oder ca. 2 Sekunden, wieder verfügbar werden, so können die abgespeicherten Inhalte übermittelt und die Speichereinrichtungen ausgeleert werden. Die Software-Komponenten müssen von der unterbrochenen oder gestörten Datenverbindung 150, 155 nicht benachrichtigt werden. So kann beispielsweise eine kontinuierliche Ausgabe von akustischen Informationen, die seitens des Mobilgeräts bereitgestellt werden, seitens des Haushaltsgeräts 105 sichergestellt werden. Sollte eine Datenverbindung 150, 155 länger als die vorbestimmte Zeit unterbrochen oder gestört sein, so können beide Datenverbindungen 150, 155 oder nur die betroffene Datenverbindung 150, 155 abgebaut werden. Ein erneutes Aufbauen einer Datenverbindung 150, 155 kann eine neue Authentifikation eines der Geräte 105, 110 erfordern.

Eine Ausgabe auf der Ausgabevorrichtung 140 des Haushaltsgeräts 105 erfolgt bevorzugt in Abhängigkeit einer bestimmten Entfernung zum Mobilgerät. Beispielsweise kann ein akustischer Datenstrom mit erhöhter Lautstärke ausgegeben werden, wenn sich der Benutzer 115 mit dem Mobilgerät 110 vom ausgebenden Haushaltsgerät 105 entfernt. Eine optische Darstellung kann mit steigender Entfernung vergrößert erfolgen.

Die zentrale Stelle 112 ist dazu eingerichtet, eine Richtlinie an ein Haushaltsgerät 105 bereitzustellen, die zwei Funktionen steuern kann. Eine erste mögliche Funktion besteht in einer Zuordnung eines Haushaltsgeräts 105 oder einer darauf ablaufenden Funktion zu einer auf dem Mobilgerät 110 ablaufenden Funktion. Anders ausgedrückt kann auf dem Mobilgerät 110 eine zugeordnete Applikation ("App") gestartet werden, sobald eine Kommunikation mit einem vorbestimmten Haushaltsgerät 105 erfolgt ist. Welche Applikation das ist, kann auf der Basis der Richtlinie sowie gegebenenfalls einer Randbedingung bestimmt werden. Die Randbedingung kann beispielsweise einen Funktionszustand oder eine Fähigkeit des Haushaltsgeräts 105 betreffen. Auch eine persönliche Vorliebe des Benutzers 115 des Mobilgeräts 110 kann berücksichtigt werden. Beispielsweise kann eine Rezepte-App auf dem Mobilgerät gestartet werden, wenn sich das Mobilgerät einer Garvorrichtung, wie einem Ofen oder einem Herd, nähert. Die Richtlinie kann bei Bedarf von der zentralen Stelle 112 aktualisiert werden, beispielsweise weil ein neues Haushaltsgerät 105 im gleichen Haushalt hinzugefügt wurde, weil ein neuer Benutzer 115 dem Haushalt angehört oder weil die Steuervorrichtung 125 aktualisiert wurde. Die Steuervorrichtung 125 kann beispielsweise ausgetauscht oder per Software-Update aktualisiert werden.

Eine zweite mögliche Funktion der Richtlinie besteht in einer Auswahl, mit welcher von mehreren Haushaltsgeräten 105 sich das Mobilgerät 110 koppelt. Beispielsweise kann so vorgegeben werden, dass eine erste Applikation nur mit demjenigen Haushaltsgerät 105 kommuniziert, das die geringste Entfernung zum Mobilgerät 110 aufweist. Eine zweite Applikation kann auf eine Kommunikation mit Haushaltsgeräten 110 beschränkt sein, die eine akustische Ausgabevorrichtung 140 umfassen. Andere Vorgaben oder Kombinationen sind ebenfalls möglich.

Die Richtlinie kann auch bestimmen, welche Ausgabe Vorrang vor welcher anderen Ausgabe hat. Sind beispielsweise mehrere Funktionen oder Apps in einem gekoppelten Mobilgerät 110 aktiv, so kann vorbestimmt sein, welche Ausgabe Vorrang vor welcher anderen hat. Auch einzelne Nachrichten oder Informationen können unterschiedlich priorisiert sein. Beispielsweise kann eine Benachrichtigung über das Ende einer Garzeit Vorrang gegenüber einer Ausgabe eines Videodatenstroms haben. Eine solche Unterscheidung kann auch erfolgen, wenn mehrere Mobilgeräte 110 mit einem Haushaltsgerät 105 gekoppelt sind oder kommunizieren können. In einer Fortführung können auch Prioritäten zwischen einzelnen Mobilgeräten 110 oder ihnen jeweils zugeordneten Benutzern 115 berücksichtigt werden.

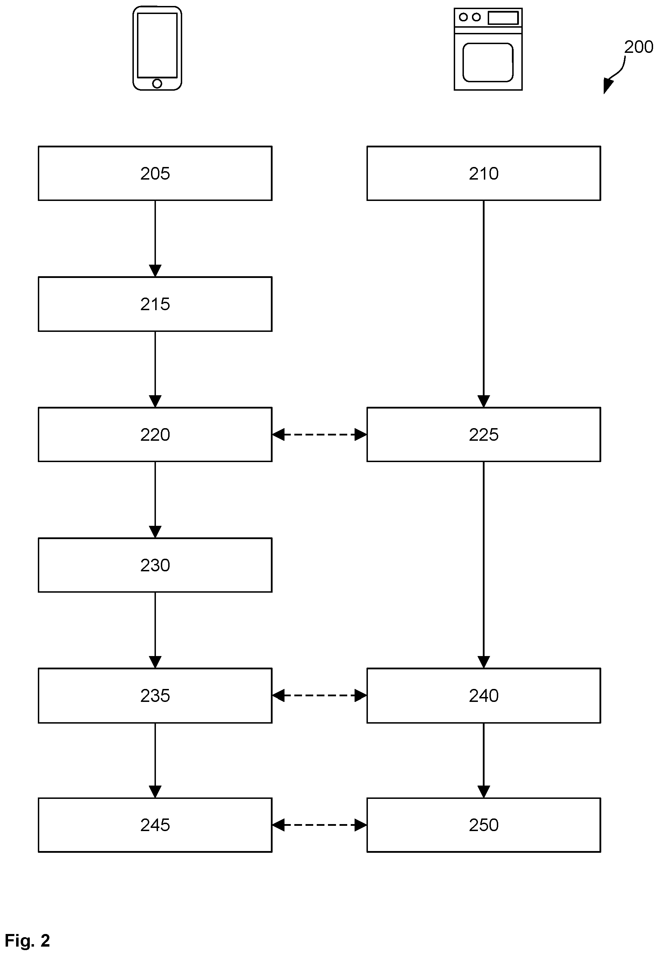

Figur 2 zeigt ein Ablaufdiagramm eines Verfahrens 200. Das Verfahren 200 kann verteilt auf verschiedenen Komponenten ausgeführt werden, insbesondere einem Haushaltsgerät 105 und einem Mobilgerät 110. Beispielhaft sind üblicherweise dem Mobilgerät 110 zugeordnete Schritte in einem linken Bereich, üblicherweise dem Haushaltsgerät 105 zugeordnete Schritte in einem rechten Bereich dargestellt.

In einem Schritt 205 kann das Mobilgerät 110 drahtlose Signale, insbesondere elektromagnetische Signale, aussenden, die in einem Schritt 210 vom Haushaltsgerät 105 empfangen werden können. Die Schritte können auch umgekehrt ausgeführt werden, sodass das Haushaltsgerät 105 Signale aussendet, die das Mobilgerät 110 empfängt. Das sendende Gerät 105, 110 kann die Signale nach Art eines Beacons aussenden, sodass das empfangende Gerät 105, 110 seinen Abstand zum Sender verbessert bestimmen kann. Die Bestimmung des Abstands auch auf der Basis von Parametern einer physischen Übertragung oder einer Bitübertragung zwischen dem Mobilgerät 110 und dem Haushaltsgerät 105 erfolgen.

In einem Schritt 215 kann das Mobilgerät 110 das Haushaltsgerät 105 identifizieren und anhand einer Richtlinie entscheiden, ob es mit ihm kommunizieren soll. Die Richtlinie kann vorgegeben sein oder von einer externen Stelle 112 heruntergeladen werden. Soll eine Kommunikation erfolgen, so kann anhand der Richtlinie bestimmt werden, welche Funktion oder App für die Kommunikation mit dem vorliegenden Haushaltsgerät 105 vorgesehen ist. Die bestimmte Funktion oder App kann gestartet oder von einer empfangenen Information benachrichtigt werden.

In einem Schritt 220 erfolgt seitens des Mobilgeräts 110 eine Kopplung mit dem Haushaltsgerät 105, das die Kopplung in einem korrespondierenden Schritt 225 durchführt. Das Koppeln kann einen Austausch von Übertragungsparametern, eine Authentifizierung oder eine Beglaubigung des Kommunikationspartners umfassen. Im Anschluss an eine Kopplung können Informationen bevorzugt in beiden Richtungen einfach ausgetauscht werden.

In einem Schritt 230 kann das Mobilgerät 110 seine Entfernung zum Haushaltsgerät 105 bestimmen. Diese Bestimmung kann insbesondere auf der Basis von Parametern erfolgen, die der Kommunikation zu Grunde liegen, beispielsweise ein RSS oder ein SNR. In einer weiteren Ausführungsform kann das Mobilgerät 110 auch seine geografische Position bestimmen, wobei es auf Parameter der Kommunikation zurückgreifen kann oder nicht. In einem Schritt 235 können die bestimmte Entfernung und/oder die bestimmte Position an das Haushaltsgerät 105 übermittelt werden.

Das Haushaltsgerät 105 bestimmt in einem Schritt 240 seine Entfernung zum Mobilgerät 110. Dazu kann es eine zuvor empfangene, seitens des Mobilgeräts 110 bestimmte Entfernung zu Grunde legen. In einer Variante kann das Haushaltsgerät 105 die Entfernung bezüglich einer eigenen Position und einer Position des Mobilgeräts 110 bestimmen, die es zuvor vom Mobilgerät 110 empfangen haben kann. Alternativ kann das Haushaltsgerät 105 die Entfernung auf der Basis von Parametern bestimmen, die der Kommunikation zu Grunde liegen, wie oben beschrieben ist, beispielsweise eines RSS oder einer SNR. In einer weiteren Ausführungsform ist ein dedizierter Sensor zur Bestimmung der Entfernung vorgesehen. Mehrere Informationsquellen können zur Bestimmung des Abstands auch miteinander kombiniert werden.

In einem Schritt 245 kann das Mobilgerät 105 eine Ausgabe über die etablierte Datenverbindung 150, 155 an das Haushaltsgerät 105 übermitteln. Dieses kann die Ausgabe in einem Schritt 250 entgegennehmen und in Abhängigkeit der bestimmten Entfernung aufbereiten. Beispielsweise können die Größe, Häufigkeit, Farbgebung oder Ausrichtung einer optischen Ausgabe in Abhängigkeit der Entfernung bestimmt werden. Je größer die Entfernung ist, desto klarer oder auffälliger kann die Ausgabe gestaltet werden. Eine akustische Ausgabe kann in ihrer Lautstärke oder eines verwendeten Frequenzspektrums in Abhängigkeit der Entfernung angepasst werden. Die aufbereitete Ausgabe kann dann mittels der Ausgabevorrichtung 140 ausgegeben werden.

### Bezugszeichen

- 100: System
- 105: Haushaltsgerät
- 110: Mobilgerät
- 112: zentrale Stelle
- 115: Benutzer
- 120: Kommunikationseinrichtung
- 125: Steuervorrichtung
- 130: Verarbeitungseinrichtung
- 135: Eingabevorrichtung
- 140: Ausgabevorrichtung
- 145: drahtlose Kommunikationseinrichtung
- 150: erste Datenverbindung (Eingabe)
- 155: zweite Datenverbindung (Ausgabe)
- 160: Speichervorrichtung

- 200: Verfahren
- 205: Aussenden / Empfangen drahtloser Signale
- 210: Aussenden / Empfangen drahtloser Signale
- 215: Richtlinie prüfen, App starten
- 220: Koppeln
- 225: Koppeln
- 230: Bestimmen Position / Entfernung
- 235: Übermitteln Position / Entfernung
- 240: Bestimmen Entfernung
- 245: Übermitteln Ausgabe
- 250: Bereitstellen Ausgabe

## Patentansprüche

1. Haushaltsgerät (105), umfassend:
- eine Kommunikationseinrichtung (145) zur drahtlosen Kommunikation;
- eine Ausgabevorrichtung (140);
- eine Einrichtung (145) zur Bestimmung einer Entfernung zu einem Mobilgerät (110); und
- eine Verarbeitungseinrichtung (130), **dadurch gekennzeichnet, dass** die Verarbeitungseinrichtung (130) dazu eingerichtet ist, das Mobilgerät (110) drahtlos mit dem Haushaltsgerät (105) zu koppeln, und dass die Verarbeitungseinrichtung (130) ferner dazu eingerichtet ist,
- eine von dem Mobilgerät (110) an das Haushaltsgerät (105) übermittelte Ausgabe
- einer auf dem Mobilgerät (110) ablaufenden Funktion, die
über die Steuerung des Haushaltsgeräts (105) hinausgeht,
in Abhängigkeit der bestimmten Entfernung
auf der Ausgabevorrichtung (140) des Haushaltsgeräts (105) bereitzustellen.

2. Haushaltsgerät (105) nach Anspruch 1, wobei die Einrichtung (145) zur Bestimmung der Entfernung integriert mit der Kommunikationseinrichtung (145) ausgeführt ist.

3. Haushaltsgerät (105) nach Anspruch 2, wobei die Kommunikationseinrichtung (145) dazu eingerichtet ist, die Entfernung auf der Basis einer Stärke oder einer Störungsfreiheit eines vom Mobilgerät (110) empfangenen drahtlosen Signals zu bestimmen.

4. Haushaltsgerät (105) nach einem der vorangehenden Ansprüche, wobei die Ausgabevorrichtung (140) eine Anzeigeeinrichtung umfasst und eine Größe, ein Detailreichtum oder eine Farbwahl der Ausgabe in Abhängigkeit der bestimmten Entfernung gesteuert wird.

5. Haushaltsgerät (105) nach einem der vorangehenden Ansprüche, wobei die Ausgabevorrichtung (140) eine steuerbare Schallquelle umfasst und eine Lautstärke der Ausgabe in Abhängigkeit der bestimmten Entfernung gesteuert wird.

6. System (100), umfassend
- ein Haushaltsgerät (105) nach einem der Ansprüche 1 bis 5 und
- ein Mobilgerät (110) mit einer Kommunikationseinrichtung (120) zur drahtlosen Kopplung mit dem Haushaltsgerät (105),
wobei das Mobilgerät (110) dazu eingerichtet ist, die bereitzustellende Ausgabe an das Haushaltsgerät (105) zu übermitteln.

7. System (100) nach Anspruch 6, wobei das Mobilgerät (110) dazu eingerichtet ist, eine Kopplung mit einem Haushaltsgerät (105) nach einer vorbestimmten Richtlinie durchzuführen.

8. System (100) nach Anspruch 7, wobei die Richtlinie umfasst, dass sich das Mobilgerät (110) nur mit einem vorbestimmten Haushaltsgerät (105) von mehreren Haushaltsgeräten (105) koppelt.

9. System (100) nach Anspruch 7 oder 8, wobei die Richtlinie Informationen darüber umfasst,
- unter welchen Umständen welche auf dem Mobilgerät (110) installierte Funktion zu starten ist und/oder
- unter welchen Umständen die Ausgabe welcher auf dem Mobilgerät (110) installierten Funktion an das Haushaltsgerät (105) zu übermitteln und auf der Ausgabevorrichtung (140) des Haushaltsgeräts (105) auszugeben ist.

10. System (100) nach einem der Ansprüche 6 bis 9, wobei das Mobilgerät (110) dazu eingerichtet ist,
- drahtlose Signale (155) vom Haushaltsgerät (105) zu empfangen,
- einen Hinweis auf seine Entfernung zum Haushaltsgerät (105) auf der Basis von empfangenen Signalen zu bestimmen; und
- die Entfernung an das Haushaltsgerät (105) zu übertragen.

11. System (100) nach einem der Ansprüche 6 bis 10, wobei das Mobilgerät (110) dazu eingerichtet ist, die Ausgabe am Haushaltsgerät (105) ebenfalls auf dem Mobilgerät (110) auszugeben, wobei eine Ausgabe auf dem Mobilgerät (110) der Ausgabe am Haushaltsgerät (105), insbesondere hinsichtlich Größe, Detailreichtum, Farbwahl und/oder Lautstärke, entspricht.

12. System (100) nach einem der Ansprüche 7 bis 11, ferner umfassend eine zentrale Stelle (112), die dazu eingerichtet ist, die vorbestimmte Richtlinie bereitzustellen und/oder zu aktualisieren.

13. System (100) nach einem der Ansprüche 10 bis 12,
- wobei das Mobilgerät (110) dazu eingerichtet ist, seine Position auf der Basis der empfangenen drahtlosen Signale zu bestimmen und an das Haushaltsgerät (105) zu übermitteln; und
- wobei das Haushaltsgerät (105) dazu eingerichtet ist, die Entfernung von dem Mobilgerät (110) auf der Basis seiner Position und der Position des Mobilgeräts (110) zu bestimmen.

14. Verfahren (200), folgende Schritte umfassend:
- Bestimmen (240) einer Entfernung zwischen einem Haushaltsgerät (105) und einem Mobilgerät (110);
- drahtloses Koppeln (220, 225) des Haushaltsgeräts (105) mit dem Mobilgerät (110);
- Übermitteln (245) einer Ausgabe des Mobilgeräts (110) an das Haushaltsgerät (105); und
- Bereitstellen (250) der Ausgabe am Haushaltsgerät (105) in Abhängigkeit der bestimmten Entfernung.
**dadurch gekennzeichnet, dass**
in den Schritten des Übermittelns (245) und des Bereitstellens (250)
- eine Ausgabe einer auf dem Mobilgerät (110) ablaufenden Funktion, die
- über die Steuerung des Haushaltsgeräts (105) hinausgeht,
von dem Mobilgerät (110) an das Haushaltsgerät (105) übermittelt und in Abhängigkeit von der bestimmten Entfernung auf der Ausgabevorrichtung (140) des Haushaltsgeräts (105) bereitgestellt wird.

15. Verfahren (200) nach Anspruch 14, wobei die Entfernung auf der Basis eines zwischen dem Haushaltsgerät (105) und dem Mobilgerät (110) übermittelten drahtlosen Kommunikationssignals (150, 155) bestimmt (240) wird.

## Claims

1. Household appliance (105), comprising:
- a communications facility (145) for wireless communication;
- an output apparatus (140);
- a facility (145) for determining a distance with respect to a mobile device (110); and
- a processing facility (130),
**characterised in that** the processing facility (130) is configured so as to wirelessly couple the mobile device (110) to the household appliance (105), and that the processing facility (130) is further configured so as to provide
- an output that is transmitted from the mobile device (110) to the household appliance (105),
- a function which runs on the mobile device (110) and
• goes beyond controlling the household appliance (105),
• in dependence upon the determined distance
• on the output apparatus (140) of the household appliance (105).

2. Household appliance (105) according to claim 1, wherein the facility (145) for determining the distance is embodied as integrated with the communications facility (145).

3. Household appliance (105) according to claim 2, wherein the communications facility (145) is configured so as to determine the distance on the basis of a strength or a freedom from interference of a wireless signal that is received from the mobile device (110)

4. Household appliance (105) according to one of the preceding claims, wherein the output apparatus (140) comprises a display facility and a size, a richness of detail or a colour selection of the output is controlled in dependence upon the distance that is determined.

5. Household appliance (105) according to one of the preceding claims, wherein the output apparatus (140) comprises a controllable sound source and a volume of the output is controlled in dependence upon the determined distance.

6. System (100), comprising
- a household appliance (105) according to one of claims 1 to 5 and
- a mobile device (110) having a communications facility (120) for wirelessly coupling to the household appliance (105),
wherein the mobile device (110) is configured so as to transmit the output, which is to be provided, to the household appliance (105).

7. System (100) according to claim 6, wherein the mobile device (110) is configured so as to couple to a household appliance (105) according to a predetermined guideline.

8. System (100) according to claim 7, wherein the guideline comprises that the mobile device (110) only couples to a predetermined household appliance (105) of multiple household appliances (105).

9. System (100) according to claim 7 or 8, wherein the guideline comprises information regarding
- under which circumstances which function that is installed on the mobile device (110) is to be started and/or
- under which circumstances the output of which function that is installed on the mobile device (110) is to be transmitted to the household appliance (105) and is to be output on the output apparatus (140) of the household appliance (105).

10. System (100) according to one of claims 6 to 9, wherein the mobile device (110) is configured so as to
- receive wireless signals (155) from the household appliance (105),
- determine an indication of the distance of the mobile device with respect to the household appliance (105) on the basis of signals that are received; and
- transmit the distance to the household appliance (105).

11. System (100) according to one of claims 6 to 10, wherein the mobile device (110) is configured so as to also output the output on the household appliance (105) on the mobile device (110), wherein an output on the mobile device (110) corresponds to the output on the household appliance (105), in particular with regard to size, a richness of detail, colour selection and/or volume.

12. System (100) according to one of claims 7 to 11, further comprising a central point (112) that is configured so as to provide and/or to update the predetermined guideline.

13. System (100) according to one of claims 10 to 12,
- wherein the mobile device (110) is configured so as to determine its position on the basis of the wireless signals that are received and so as to transmit to the household appliance (105); and
- wherein the household appliance (105) is configured so as to determine the distance from the mobile device (110) on the basis of the position of the household appliance and the position of the mobile device (110).

14. Method (200) comprising the following steps:
- determining (240) a distance between a household appliance (105) and a mobile device (110);
- wirelessly coupling (220, 225) the household appliance (105) to the mobile device (110);
- transmitting (245) an output of the mobile device (110) to the household appliance (105); and
- providing (250) the output on the household appliance (105) in dependence upon the determined distance.
**characterised in that**
in the steps of transmitting (245) and providing (250)
- an output of a function that is running on the mobile device (110), which
- goes beyond controlling the household appliance (105),
is transmitted from the mobile device (110) to the household appliance (105) and is provided in dependence upon the determined distance on the output apparatus (140) of the household appliance (105).

15. Method (200) according to claim 14, wherein the distance is determined (240) on the basis of a wireless communication signal (150, 155) that is transmitted between the household appliance (105) and the mobile device (110).

## Revendications

1. Appareil électroménager (105) comprenant :
- un dispositif de communication (145) pour une communication sans fil,
- un dispositif de sortie (140),
- un moyen (145) pour déterminer une distance par rapport à un appareil mobile (110), et
- un dispositif de traitement (130),
**caractérisé en ce que** le dispositif de traitement (130) est configuré pour coupler l'appareil mobile (110) sans fil à l'appareil électroménager (105), et
**en ce que** le dispositif de traitement (130) est configuré en outre pour : fournir
- une sortie transmise par l'appareil mobile (110) à l'appareil électroménager (105)
- d'une fonction exécutée sur l'appareil mobile (110), qui surpasse la commande de l'appareil électroménager (105),
en fonction de la distance déterminée,
sur le dispositif de sortie (140) de l'appareil électroménager (105).

2. Appareil électroménager (105) selon la revendication 1, dans lequel le moyen (145) pour déterminer la distance est réalisé de façon à être intégré au dispositif de communication (145).

3. Appareil électroménager (105) selon la revendication 2, dans lequel le dispositif de communication (145) est configuré pour déterminer la distance sur la base d'une intensité ou d'une absence de brouillage d'un signal sans fil reçu de l'appareil mobile (110).

4. Appareil électroménager (105) selon l'une des revendications précédentes, dans lequel le dispositif de sortie (140) comprend un moyen d'affichage et une grandeur, un niveau de détail ou un choix de couleur de la sortie est commandé(e) en fonction de la distance déterminée.

5. Appareil électroménager (105) selon l'une des revendications précédentes, dans lequel le dispositif de sortie (140) comprend une source sonore commandable et une intensité sonore de la sortie est commandée en fonction de la distance déterminée.

6. Système (100) comprenant :
- un appareil électroménager (105) selon l'une des revendications 1 à 5, et
- un appareil mobile (110) comprenant un dispositif de communication (120) pour un couplage sans fil avec l'appareil électroménager (105),
dans lequel l'appareil mobile (110) est configuré pour transmettre la sortie à fournir à l'appareil électroménager (105).

7. Système (100) selon la revendication 6, dans lequel l'appareil mobile (110) est configuré pour exécuter un couplage avec un appareil électroménager (105) en application d'une directive prédéterminée.

8. Système (100) selon la revendication 7, dans lequel la directive inclut le fait que l'appareil mobile (110) se couple uniquement avec un appareil électroménager (105) prédéterminé parmi plusieurs appareils ménagers (105).

9. Système (100) selon la revendication 7 ou 8, dans lequel la directive comprend des informations ayant trait aux suivants :
- quelle fonction installée sur l'appareil mobile (110) doit-elle être démarrée et dans quelles circonstances, et/ou
- dans quelles circonstances la sortie de quelle fonction installée sur l'appareil mobile (110) doit-elle être transmise à l'appareil électroménager (105) et délivrée sur le dispositif de sortie (140) de l'appareil électroménager (105).

10. Système (100) selon l'une des revendications 6 à 9, dans lequel l'appareil mobile (110) est configuré pour :
- recevoir des signaux sans fil (155) de l'appareil électroménager (105),
- déterminer une indication sur sa distance par rapport à l'appareil électroménager (105) sur la base des signaux reçus, et
- transmettre la distance à l'appareil électroménager (105).

11. Système (100) selon l'une des revendications 6 à 10, dans lequel l'appareil mobile (110) est configuré pour délivrer la sortie au niveau de l'appareil électroménager (105) également sur l'appareil mobile (110), dans lequel une sortie sur l'appareil mobile (110) correspond à la sortie sur l'appareil électroménager (105), en particulier concernant une grandeur, un niveau de détail, un choix de couleur et/ou une intensité sonore.

12. Système (100) selon l'une des revendications 7 à 11, comprenant en outre un organe central (112), qui est configuré pour fournir et/ou actualiser la directive prédéterminée.

13. Système (100) selon l'une des revendications 10 à 12,
- dans lequel l'appareil mobile (110) est configuré pour déterminer sa position sur la base des signaux sans fil reçus et la transmettre à l'appareil électroménager (105). et
- dans lequel l'appareil électroménager (105) est configuré pour déterminer la distance par rapport à l'appareil mobile (110) sur la base de sa position et de la position de l'appareil mobile (110).

14. Procédé (200) comprenant les étapes suivantes :
- détermination (240) d'une distance entre un appareil électroménager (105) et un appareil mobile (110),
- couplage sans fil (220, 225) de l'appareil électroménager (105) avec l'appareil mobile (110),
- transmission (245) d'une sortie de l'appareil mobile (110) à l'appareil électroménager (105), et
- fourniture (250) de la sortie à l'appareil électroménager (105) en fonction de la distance déterminée,
**caractérisé en ce que**
dans les étapes de transmission (245) et de fourniture (250),
- une sortie d'une fonction exécutée sur l'appareil mobile (110), qui
- surpasse la commande de l'appareil électroménager (105), est transmise par l'appareil mobile (110) à l'appareil électroménager (105), et est fournie sur le dispositif de sortie (140) de l'appareil électroménager (105) en fonction de la distance déterminée.

15. Procédé (200) selon la revendication 14, dans lequel la distance est déterminée (240) sur la base d'un signal de communication sans fil (150, 155) transmis entre l'appareil électroménager (105) et l'appareil mobile (110).
